# EUROPEAN PATENT APPLICATION

(11) **EP 4 727 093 A1**
(43) Date of publication of application: **15.04.2026**
(21) Application number: 25207395.2
(22) Date of filing: 08.10.2025
(51) Int. Cl.: H04L 67/63, H04L 41/00, H04L 45/00, H04L 47/00, H04L 69/22

(54) **TRANSPORTING VENDOR SPECIFIC PROTOCOL OVER INTERNET PROTOCOL**

(30) Priority: 08.10.2024 US 202418909756; 30.12.2024 US 202419005300
(71) Applicant: Nokia Solutions and Networks Oy, 02610 Espoo (FI)
(72) Inventor: DUTTA, Pranjal Kumar, Sunnyvale, CA (US)
(74) Representative: Nokia EPO representatives

(57) **Abstract**

Various embodiments provide methods and apparatus for transporting a vendor-proprietary protocol comprising vendor-proprietary protocol packets over Internet Protocol (IP). The vendor-proprietary protocol can be transported over IP by encapsulating the vendor-proprietary protocol packets in IP headers such that the vendor-proprietary protocol packets are carried as the payload of IP packets. A vendor-proprietary protocol indicator can be encoded into the IP header to indicate that the payload of the IP packet comprises a vendor-proprietary protocol packet and a Vendor Unique Protocol Number tuple comprising a vendor identification indicator and a vendor protocol identification indicator can be added as an IP header extension to uniquely distinguish the vendor-proprietary protocol from other vendor-proprietary protocols that may also be running over the same network.

## Description

### TECHNICAL FIELD

Various example embodiments relate generally to the field of Internet Protocol (IP) networking and more particularly to the deployment of a vendor-proprietary protocol that is transported over Internet Protocol.

### BACKGROUND

Network Protocols are sets of rules that define the communication of data between various devices in a network. These protocols define guidelines and conventions for transmitting and receiving data, ensuring efficient and reliable data communication. A protocol is like a language that computers use to talk to each other, ensuring they understand and can respond to each other's messages correctly. While it is possible to write a single protocol that does everything (i.e. it takes data from an application on one device and sends it to an application on another device), this approach is very inflexible. Instead, the approach typically used in networking today is to split up the various tasks required to communicate data by creating a variety of protocols which each perform a particular function and which can work together, typically in a layered fashion, to provide a more flexible communication framework.

Network protocols are generally configured to perform a variety of functions and they are sometimes broadly classified into four major categories: network security, network OAM (operations, administration and maintenance), network control, and network communication. Very generally, network security protocols are designed to protect the confidentiality and authenticity of data as it traverses a network. They establish secure channels for communication and make sure that sensitive information is not vulnerable to interception or tampering. Network OAM protocols can be used for the administration, monitoring, and control of network devices and resources. They help network administrators configure and troubleshoot network components efficiently. Network control protocols establish channels/paths across a network for data communication. They enable network nodes to dynamically manage network resources, distribute routing information, and set up optimal loop-free paths across a network. Finally, network communication protocols enable the exchange of data and information between devices on a network. They determine how data is formatted, transmitted, and received, which ensures effective communication.

In order to ensure interoperability, the networking community has agreed upon certain rules and procedures for how data should be formatted, sent, received, and processed on a network so that devices made by vendors can apply these agreed upon rules/procedures to communicate with each other. Various organizations (such as ISO, IEC, ITU, IEEE, EIA/TIA, ANSI, ETSI, etc.) have been formed to evaluate, adopt, and publish these agreed upon rules and procedures, which are often referred to as Open Protocols or Standard Protocols. Standards bodies, typically comprised of members that have an interest in the industry to which a standard applies, are responsible for proposing and accepting the Standard Protocols. In many standards bodies, the standards body members submit draft proposals with detailed specifications that they propose be incorporated into a Standards Protocol. The draft proposals are discussed/debated among the standards body members with the goal of building a consensus on the proposed specifications and, eventually, a vote is taken on whether or not the proposed specifications should be adopted into the standard. If the vote passes, the proposed specifications are adopted into the standard and the standard is published making it available to anyone with an interest.

As mentioned above, protocols today have been split up, in a layered fashion, according to the various tasks required to communicate data. Several models exist which organize sets of network protocols used by networks according to a functional criterion. The Open Systems Interconnection (OSI) model is a 7-layer architecture with each layer having specific functionality to perform. The layers work collaboratively to transmit data from one device to another on a network. The 7-layers comprise the: Application layer, Presentation layer, Session layer, Transport layer, Network layer, Data Link layer, and Physical layer.

The TCP/IP (Transport Control Protocol/Internet Protocol) model is another framework for organizing network protocols. The TCP/IP model consists of 4 layers. They are: the Application layer, the Transport layer, the Internet layer, and the Network Access layer. The TCP/IP model Application layer corresponds to the combined Application, Presentation, and Session layers of the OSI model; the TCP/IP model Transport layer corresponds to the OSI model Transport layer; the TCP/IP model Internet layer corresponds to the OSI model Network layer; and the TCP/IP model Network Access layer corresponds to the combined Physical and Data Link layers of the OSI model. The OSI model is a conceptual framework that is typically not fully implemented by modern protocols, whereas the TCP/IP model is a practical implementation.

A protocol suite or family is a collection of protocols that are designed to work together to allow devices to communicate with each other over a network. A protocol stack or network stack is an implementation of a network protocol suite or protocol family. While some of these terms are used interchangeably, strictly speaking, a collection of communication protocols is a suite, and a software implementation of the protocol suite is a stack. The approach used in networking today is to create protocol suites implemented as layered protocol stacks in which each level of the stack performs a particular function and communicates with the levels above and below it.

The Internet Protocol (IP) suite, also commonly referred to as TCP/IP, is one of the most commonly used network protocol suites. The IP suite consists of many protocols that operate at one of the 4 layers of the TCP/IP model. The IP suite draws its name from one of the foundational protocols used in the suite: the Internet Protocol (IP). Internet Protocol (IP) operates at the TCP/IP Internet layer (OSI Network layer). The IP suite was designed to be independent of networking hardware and should run across any connection media, one of the earliest and most common being Ethernet. Ethernet is a layer-2 protocol/standard covering the OSI Physical and Data Link layers (which corresponds to the Network Access layer in the TCP/IP model).

When two devices communicate across a network, the data must travel through various items of networking equipment. This networking equipment is commonly referred to by the OSI level in which the equipment operates. For example, a network router is an example of networking equipment that operates at the OSI Network layer and, as such, is commonly referred to as a level 3 device because the OSI Network layer is the third layer of the OSI model. Similarly, a switch, which operates at the OSI Data Link layer, is referred to as a level 2 device because the OSI Data Link layer is the second layer of the OSI model. Because a router operates at the Network layer (Internet layer of the TCP/IP model), it typically doesn't support upper layer application protocols such as those operating in the OSI Application, Presentation, and Session layers (the TCP/IP Application layer). A router works on network addresses which are part of the Network protocol (IP in the TCP/IP protocol suite). A router can route many different protocols at the same time, but it typically doesn't do protocol conversion. In other words, an IP packet coming in to a router will be an IP packet going out of the router. Likewise, a switch doesn't have OSI level 3, 4, 5, 6, or 7 protocol stacks as it doesn't need them. A switch typically doesn't care about the routing protocol or the application protocol that passes through it. Because a switch operates at OSI level 2 (the Data Link layer) it only needs to understand the Media Access Control (MAC) addresses that are part of the Ethernet protocol.

While Standard Protocols can be valuable for ensuring seamless communication and interoperability among various different types of the devices designed and built by different vendors, there are sometimes reasons why a company may prefer to keep a protocol proprietary instead of having the protocol adopted into a standard. For example, it is easy to understand why a vendor might prefer to keep private some of the more proprietary aspects of its devices. A vendor that develops a protocol may want to keep how it works secret from competitors, which makes publishing the specifications in a Standard Protocol undesirable. Other times, a vendor may develop proprietary protocols that facilitate enhanced functionality and/or specialized features in their own devices but which do not apply to other companies' products. In this type of situation, the vendor may decide to forego the additional work involved in standardization. Still further, sometimes, when time is of the essence, a vendor may quickly develop and deploy a protocol that addresses an urgent need. If so, because drafting and submitting a standards proposal, building a consensus among the standards board members, voting on the draft standards proposal, incorporating the protocol into a standard, and publishing the standard can be a time-consuming process, the vendor may decide that timing precludes standardization. As such, some protocols are not standardized but are instead used as vendor-proprietary protocols.

Many vendor-proprietary protocols are designed to be transported directly over the IP suite, such as IP version 4 (IPv4) or IP version 6 (IPv6), particularly in the DevOps model. For ease of reference throughout this application, a protocol that runs directly over IP is termed as an "IP-based protocol." In vendor-proprietary protocol development, particularly in the DevOps model, the core focus is to facilitate the quick rollout of a vendor-proprietary protocol. In addition, the vendor may employ its own "secret sauce" in the protocol, which mandates keeping the details of the protocol private. These vendor-proprietary protocols can often be categorized into one of the following categories.
- Proprietary/experimental transport protocols used as an alternative to a conventional standardized transport protocol such as TCP, UDP, SCTP, QUIC or the like.
- Proprietary OAM protocols used as an alternative to ICMP and the like.
- Proprietary network control protocols similar to OSPF, OSPFv3, RSVP-TE and the like.
- Proprietary innovative applications that do not fall under any of the above categories.

However, the current structure of IP imposes several serious limitations that make deploying a vendor-proprietary IP-based protocol difficult or even impractical in some situations. Limitations on the maximum number of proprietary protocols in a network, prohibitions against proprietary protocols from multiple vendors co-existing on the same network, and/or the need to involve external parties, such as standards organizations, etc., work to stifle innovation in vendor-proprietary IP-based protocol development, particularly in the DevOps model. As such, a flexible and generic method for designing and deploying vendor-proprietary IP-based protocols would be desirable.

### SUMMARY OF SOME EMBODIMENTS

This section introduces aspects that may help facilitate a better understanding of the disclosure. Accordingly, the statements of this section are to be read in this light and are not to be understood as admissions about what is in the prior art or what is not in the prior art.

Various example embodiments provide methods and apparatus for transporting a vendor-proprietary protocol comprising vendor-proprietary protocol packets over Internet Protocol (IP). The example embodiments described in the subject disclosure ease the development of vendor-proprietary protocols transported directly over Internet Protocol (IP), particularly in the DevOps model. The vendor-proprietary protocol can be transported over IP by encapsulating the vendor-proprietary protocol packets in IP headers such that the vendor-proprietary protocol packets are carried as the payload of IP packets. A vendor-proprietary protocol indicator can be encoded into the IP header to indicate that the payload of the IP packet comprises a vendor-proprietary protocol packet and a Vendor Unique Protocol Number tuple comprising a vendor identifier and a protocol identifier can be added as an IP header extension to uniquely distinguish the vendor-proprietary protocol from other vendor-proprietary protocols that may also be running over the same network. The vendor identifier can comprise a vendor Organizationally Unique Identifier (OUI) such as the 24-bit Vendor OUI assigned by IEEE that is commonly encoded in broad range of products developed by a vendor to identify the vendor as the source of the products. The protocol identifier can comprise a protocol number assigned by the vendor to identify the specific vendor-proprietary protocol being transported over IP.

Example embodiments can be configured for transporting a vendor-proprietary protocol comprising vendor-proprietary protocol packets over Internet Protocol (IP) by encapsulating each of the vendor-proprietary protocol packets with an IP header, encoding the IP header with a vendor-proprietary protocol indicator comprising indicia indicating that the payload corresponding to the IP header comprises a vendor-proprietary protocol packet, adding an IP header extension to the IP header that is capable of uniquely identifying the vendor-proprietary protocol from other vendor-proprietary protocols that might be running on the same network, and sending the encapsulated vendor-proprietary protocol packets over a network. The IP header extension can include at least a Vendor Unique Protocol Number tuple comprising a vendor identification field and a protocol identification field. The vendor identification field can be encoded with a vendor identification indicator identifying the vendor of the vendor-proprietary protocol and the protocol identification field can be encoded with a vendor protocol identification indicator identifying the vendor-proprietary protocol. The vendor identification indicator can comprise a vendor organizationally unique identifier (OUI) assigned to the vendor and the protocol identification indicator can comprise a vendor protocol number assigned by the vendor to identify the vendor-proprietary protocol.

The example embodiments can be configured to run over Internet Protocol version 4 (IPv4) or Internet Protocol version 6 (IPv6). If an embodiment is running IPv4, the vendor-proprietary protocol indicator can comprise a designated standard vendor-proprietary protocol number encoded in the Protocol field of the IPv4 header and the IP header extension can comprise a Vendor Unique Protocol Number Option encoded in the Options field of the IP header. In addition to the Vendor Unique Protocol Number tuple, the Vendor Unique Protocol Number Option can also include a Type field encoded with indicia indicating that the IP header extension is a Vendor Unique Protocol Number Option.

If an embodiment is running IPv6, the IP header extension can comprise a Vendor Private Protocol Extension Header (EH) appended to the IP header and the vendor-proprietary protocol indicator can comprise a pointer to the Vendor Private Protocol EH encoded into the Next Header field of the IPv6 header. In addition to the Vendor Unique Protocol Number tuple, the Vendor Private Protocol EH can also comprise a Next Header field and a Hdr Ext Len field. If the IP header includes a subsequent IPv6 EH appended after the Vendor Private Protocol EH, then the Next Header field of the Vendor Private Protocol EH can be encoded with a pointer to the subsequent IPv6 EH. If the IP header does not include a subsequent IPv6 EH appended after the Vendor Private Protocol EH, then the Next Header field can be encoded with a pointer to an Upper Layer EH. The Hdr Ext Len field can be encoded with indicia indicating the length of the Vendor Private Protocol EH.

Apparatus according to various example embodiments can comprise a network node configured to communicate with other network nodes on a network by using Internet Protocol (IP) to transport vendor-proprietary protocol packets of the vendor-proprietary protocol over the network. Example network nodes can comprise a processor and memory including program code. The memory and program code, in conjunction with the processor, can be configured to cause the network node to encapsulate each of the vendor-proprietary protocol packets with an IP header, encode the IP header with a vendor-proprietary protocol indicator that indicates that the payload corresponding to the IP header comprises a vendor-proprietary protocol packet, add an IP header extension to the IP header that is capable of uniquely identifying the vendor-proprietary protocol from other vendor-proprietary protocols that might be running on the same network and send the encapsulated vendor-proprietary protocol packets over a network. The IP header extension can include at least a Vendor Unique Protocol Number tuple comprising a vendor identification field and a protocol identification field. The vendor identification field can be encoded with a vendor identification indicator identifying the vendor of the vendor-proprietary protocol and the protocol identification field can be encoded with a vendor protocol identification indicator identifying the vendor-proprietary protocol. The vendor identification indicator can comprise a vendor organizationally unique identifier (OUI) assigned to the vendor and the protocol identification indicator can comprise a vendor protocol number assigned by the vendor to identify the vendor-proprietary protocol.

The example embodiments can be configured to run over Internet Protocol version 4 (IPv4) or Internet Protocol version 6 (IPv6). If an embodiment is running IPv4, the vendor-proprietary protocol indicator can comprise a designated standard vendor-proprietary protocol number encoded in the Protocol field of the IPv4 header and the IP header extension can comprise a Vendor Unique Protocol Number Option encoded in the Options field of the IP header. In addition to the Vendor Unique Protocol Number tuple, the Vendor Unique Protocol Number Option can also include a Type field encoded with indicia indicating that the IP header extension is a Vendor Unique Protocol Number Option.

If the apparatus is running IPv6, the IP header extension can comprise a Vendor Private Protocol Extension Header (EH) appended to the IP header and the vendor-proprietary protocol indicator can comprise a pointer to the Vendor Private Protocol EH encoded in the Next Header field in the IPv6 header. In addition to the Vendor Unique Protocol Number tuple, the Vendor Private Protocol EH can also comprise a Next Header field and a Hdr Ext Len field. If the IP header includes a subsequent IPv6 EH appended after the Vendor Private Protocol EH, then the Next Header field can be encoded with a pointer to the subsequent IPv6 EH. If the IP header does not include a subsequent IPv6 EH appended after the Vendor Private Protocol EH, then the Next Header field can be encoded with a pointer to an Upper Layer EH. The Hdr Ext Len field can be encoded with indicia indicating the length of the Vendor Private Protocol EH.

One or more of the above embodiments may be combined as desired.

The above summary provides a basic understanding of some aspects of the specification. This summary is not an extensive overview of the specification. It is intended to neither identify key or critical elements of the specification nor delineate any scope of the particular embodiments of the specification, or any scope of the claims. Its sole purpose is to present some concepts of the specification in a simplified form as a prelude to the more detailed description that is presented later.

### DESCRIPTION OF THE DRAWINGS

Other aspects, features, and benefits of various disclosed embodiments will become more fully apparent, by way of example, from the following detailed description and the accompanying drawings. Some embodiments are now described, by way of example only, and with reference to the accompanying drawings. Similar reference numbers represent similar elements or the same type of element on all drawings.
FIG. 1 is a schematic diagram of the deployment of a vendor-proprietary IP-based protocol in a networked system;
FIG. 2 is a schematic diagram illustrating an IPv4 header with an appended Options field according to an example embodiment;
FIG. 3a is a schematic diagram illustrating a Vendor Unique Protocol Number definition according to an example embodiment;
FIG. 3b is a schematic diagram illustrating a Vendor Unique Protocol Number Option according to an example embodiment;
FIG. 4a is a schematic diagram illustrating an IPv6 header;
FIG. 4b is a schematic diagram illustrating an IPv6 header with appended Extension Headers (EH) for encoding the IPv6 header to transport a vendor-proprietary IP-based protocol according to an example embodiment;
FIG. 5 is a schematic diagram illustrating a Vendor Private Protocol EH format according to an example embodiment; and
FIG. 6 is a flow diagram illustrating a method for transporting a vendor-proprietary IP-based protocol implemented by a node according to an example embodiment of the subject matter described herein.

### DESCRIPTION OF EMBODIMENTS

The figures and the following description illustrate specific exemplary embodiments. It will thus be appreciated that those skilled in the art will be able to devise various arrangements that, although not explicitly described or shown herein, embody the principles of the embodiments and are included within the scope of the claims. The inventive concepts are not limited to the specific embodiments or examples described below but are defined by the claims and their equivalents.

Furthermore, the following abbreviations and acronyms may be used in the present document:
"IETF" Internet Engineering Task Force
"IANA" Internet Assigned Numbers Authority
"RFC" Request for Comment
"OAM" Operation, Administration, and Maintenance
"ISO" International Organization for Standardization
"IEC" International Electrotechnical Commission
"ITU" International Telecommunication Union
"IEEE" Institute of Electrical and Electronics Engineers
"EIA" Electronic Industries Alliance
"TIA" Telecommunications Industry Association
"ANSI" American National Standards Institute
"ETSI" European Telecommunication Standards Institute
"OSI" Open Systems Interconnection
"TCP" Transport Control Protocol
"IP" Internet Protocol
"MAC" Media Access Control
"IPv4" Internet Protocol version 4
"IPv6" Internet Protocol version 6
"UDP' User Datagram Protocol
"SCTP" Stream Control Transmission Protocol
"QUIC" Quick UDP Internet Connections
"ICMP" Internet Control Message Protocol
"OSPF" Open Shortest Path First
"OSPFv3" Open Shortest Path First version 3
"RSVP-TE" Resource Reservation Protocol-Traffic Engineering

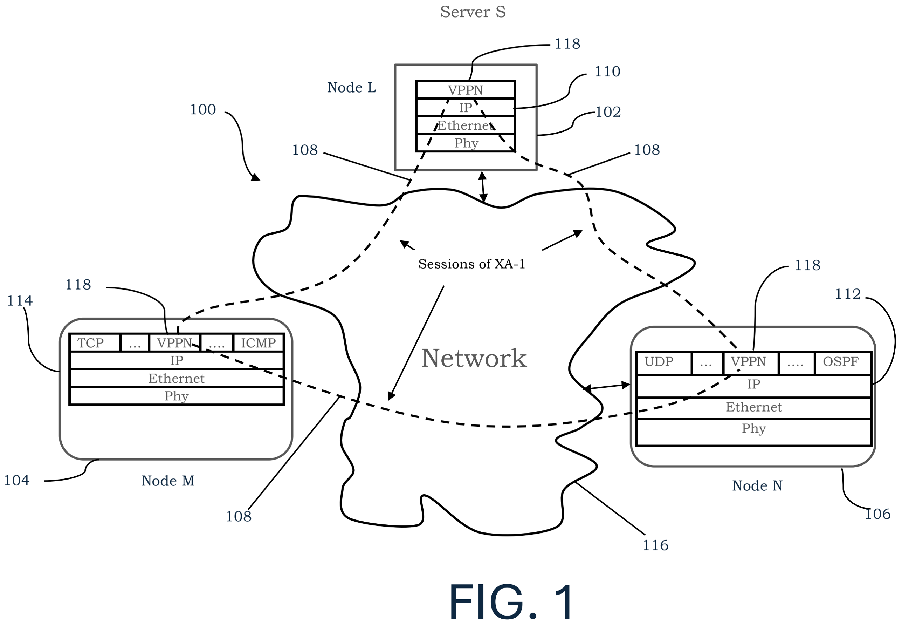

Turning now to the figures, FIG. 1 illustrates the deployment of a vendor-proprietary IP-based protocol (XA-1) over IP. As shown in FIG. 1, a typical system 100 comprises a plurality of network nodes 102, 104, and 106 (such as switches, routers, hubs, gateways, servers, etc.) developed by vendor X that are running instances of a vendor-proprietary IP-based protocol XA-1 108, and exchanging packets 110, 112, and 114 of XA-1 108 over a network 116. For example, vendor-proprietary IP-based protocol XA-1 108 may be a vendor specific OAM protocol used to measure the performance of IP packet forwarding paths between the network nodes 102, 104, 106. Alternatively, vendor-proprietary IP-based protocol XA-1 108, may be a routing protocol (i.e. network control protocol) used to exchange network topology information and compute optimal network communication paths.

To transport the vendor-proprietary IP-based protocol XA-1 108 over the network 116 using IP, a special protocol number must be allocated/assigned to the vendor-proprietary IP-based protocol XA-1 108 to uniquely identify it in the header of the IP packets used to transport it through the network 116. Protocol numbers encoded into the header of an IP packet are standardized by the Internet Assigned Numbers Authority (IANA) and defined in the IANA Assigned Internet Protocol Numbers Registry. A protocol number encoded in the header of an IP packet uniquely identifies the protocol type of the datagram portion carried as payload of the IP packet. In this case, the protocol number VPPN 118 encoded into packets 110, 112, 114 indicates that the payloads of packets 110, 112, 114 comprise vendor-proprietary IP-based protocol packets. This special protocol number VPPN 118 is encoded into the Protocol field in the IP header of the packet. The IP header, in turn, is encapsulated by a data link layer protocol header such as ethernet before the packet 110, 112, 114 is sent out over the network 116.

There are currently two ways to allocate the special protocol number that is used to identify a vendor-proprietary IP-based protocol in the header of an IP packet:
**Approach 1:** Use one of the two "Experimental Use" numbers (253 or 254) currently reserved by IANA to identify vendor-proprietary IP-based protocols in an IP packet; or
**Approach 2:** Allocate an "Unassigned" number (146 - 252) currently available in the IANA Assigned Internet Protocol Numbers Registry (IANA Registry) to identify that a vendor-proprietary IP-based protocol packet is being carried in the current IP packet. However, prior to allocating one of the "Unassigned" numbers in the IANA Registry, IANA requires the user to define the vendor-proprietary IP-based protocol in an IETF draft which should later be standardized.

Since there are only two available "Unassigned" numbers currently available in the IANA Registry for **Approach 1,** the maximum number of vendor-proprietary IP-based protocols in this approach is limited to two. Additionally, it is likely that this approach will not work in a situation where multiple vendors each want to run vendor-proprietary IP-based protocols on the same network at the same time. The protocol number must be unique for each vendor-proprietary IP-based protocol running on a network. With only two "Unassigned" numbers to choose from, it is likely that at least two of the multiple vendors will use the same "Unassigned" protocol number at the same time. This protocol number overlap between two vendors each running a different vendor-proprietary IP-based protocol will create confusion in the various network nodes 102, 104, 106 since the network nodes 102, 104, 106 will be unable to determine which of the two vendor-proprietary IP-based protocols the protocol number is meant to identify.

**Approach 2** also has drawbacks. For example, the standardization approval process for allocating a unique protocol number from IANA is very time consuming while launching a proprietary IP-based protocol under the DevOps model is typically very time sensitive. Often, an experimental proprietary IP-based protocol is used to fulfil an immediate need in customer deployments while a more mature and robust proprietary application is developed. In addition, the standardization process requires the vendor to publicly disclose the intent and nature of the proposed proprietary protocol in an IETF draft to a working group which is responsible for reviewing and approving the proposal. This prevents the vendor from keeping the details of the proprietary protocol secret making it very challenging to deploy a proprietary protocol with "secret sauce".

Example embodiments described herein propose allocating a new protocol number from the "Unassigned" range (146-252) as a "generic" vendor-proprietary protocol number that can be used by any vendor to identify that the payload of an IP packet relates to a vendor-proprietary IP-based protocol. This generic vendor-proprietary protocol number can be termed the "vendor private protocol number." Example embodiments propose allocating the "Unassigned" protocol number "150" (which is a generally well-known protocol number) for the vendor private protocol number, however another "Unassigned" protocol number could be used instead of "150". The designated "generic" vendor-proprietary protocol number could be reserved by IANA and standardized (RFC) as the vendor private protocol number such that it is understood and available for any vendor interested in implementing a vendor-proprietary protocol on a network.

Each vendor-proprietary IP-based protocol could be identified by a tuple {Vendor OUI, Vendor Protocol Number} that could optionally be implemented as an extension to the IP header. The tuple, termed the "Vendor Unique Protocol Number," would only be included if the protocol number encoded in the IP header is the vendor private protocol number (i.e. "150" in the proposed example embodiments). The Vendor OUI tuple field can be encoded with the 24-bit organizationally unique identifiers (OUI) IEEE assigns to vendors which the vendors typically encode in a broad range of their products to identify themselves as the product vendor. By doing so, the vendor of the vendor-proprietary IP-based protocol can be easily identified using the OUI encoded in the Vendor OUI tuple field. The Vendor Protocol Number tuple field could be exclusively managed by the vendor. This would allow the vendor to allocate its own protocol number to uniquely identify the proprietary IP-based protocol currently being implemented by the vendor. This technique enables a vendor to roll out a proprietary IP-based protocol in a day since the vendor exclusively controls the Vendor Protocol Number tuple field. Thus, two orthogonal proprietary IP-based protocols from two different vendors can use the same protocol number (which is encoded in the Vendor Protocol Number tuple field) but the protocols can still be distinguished using the OUI encoded in the Vendor OUI tuple field.

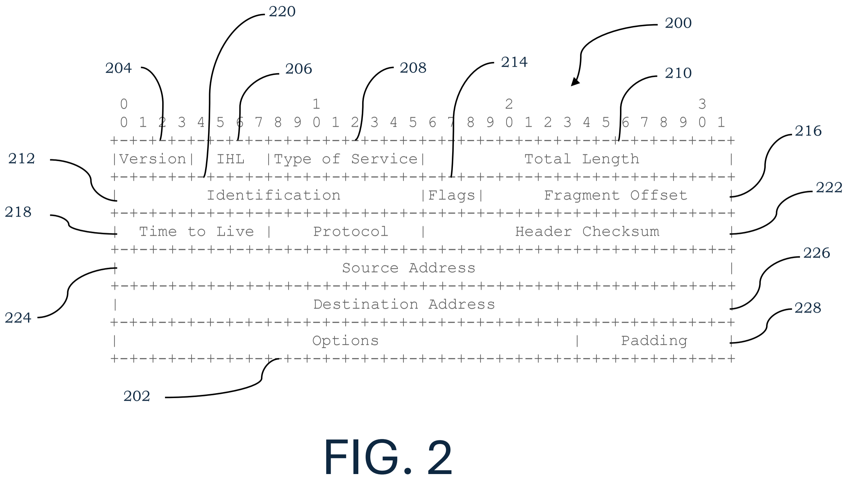

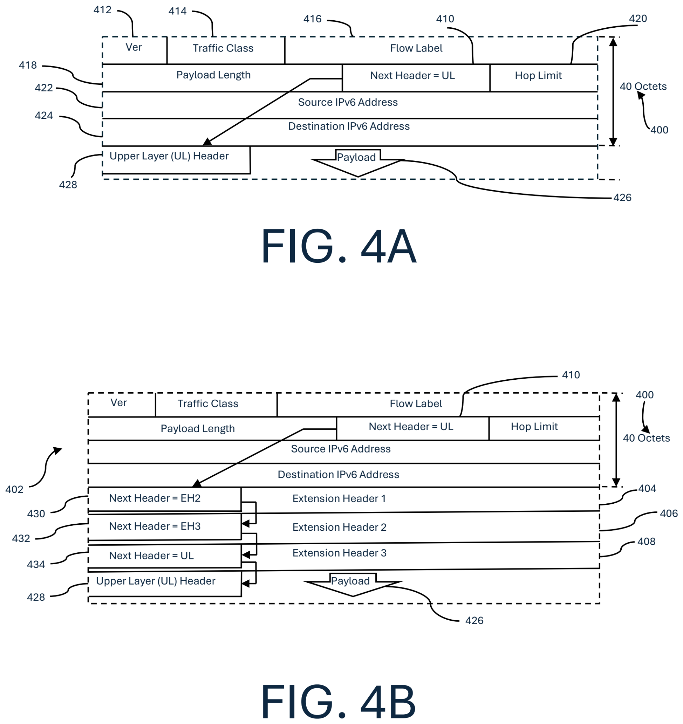

Receiving an IP packet with the vendor private protocol number (e.g "150") encoded in the IP header indicates that the payload of the IP packet is a vendor-proprietary IP-based protocol. Because the tuple {Vendor OUI, Vendor Protocol Number} represents the Vendor Unique Protocol Number, anyone receiving the IP packet can look at the tuple to uniquely identify the protocol since the Vendor OUI uniquely identifies the vendor and Vendor Protocol Number uniquely identifies the protocol developed by that vendor. Where, in the header of an IP packet, the vendor private protocol number is encoded depends on which version of IP is running on the network. In Internet Protocol version 4 (IPv4), the vendor private protocol number can be encoded in the Protocol field (220 in FIG. 2) of the IPv4 header. In Internet Protocol version 6 (IPv6), a vendor private protocol number identifier can be encoded in the Next Header field (410 in FIGs. 4a and 4b) of the IPv6 header.

FIG. 2 illustrates an example IPv4 header 200. A typical IPv4 header comprises 13 fields including an 8-bit Protocol field 220 used to specify the protocol that will receive the payload of the packet on the destination node (e.g. the vendor-proprietary IP-based protocol in the example embodiments) and an appended Options field 202 which can be used to provide for control functions that might be needed or useful in some situations but usually not necessary for most of the common IPv4 packet communications. IPv4 describes several "Options" that can be appended to an IPv4 header in the "Options" field. For example, IPv4 "Options" can include provisions for timestamps, security, and special routing to name a few. In the example embodiments described herein, we propose defining an IPv4 "Option" for the Vendor Unique Protocol Number.

In addition to the appended Options field 202, a typical IPv4 header 200 can comprise a version field 204, an IHL field 206, a Type of Service field 208, a Total Length field 210, an Identification field 212, a Flags field 214, a Fragment Offset field 216, a Time to Live field 218, a Protocol field 220, a Header Checksum field 222, a Source Address field 224, a Destination Address field 226, and Padding 228. The version field 204 is a 4-bit field used to indicate the IP version which, in the embodiment illustrated in FIG. 2 is IPv4. The IHL field 206 is a 4-bit field used to indicate the length of the IPv4 header. The Type of Service field 208 is an 8-bit field used to set the desired service expected by the packet for delivery through routers across the network. The Total Length field 210 is a 16-bit field specifying the total length of the IPv4 packet. The Identification field 212 is a 16-bit field providing a packet ID that can be used to reassemble a large IP packet that was fragmented by the source node. The Flags field 214 is a 3-bit field that can be used to enable fragmentation. The Fragment Offset field 216 is a 13-bit field that can be used to indicate the position of a fragment relative to the beginning of the payload if the IP packet was fragmented by the source node. The Time to Live field 218 is an 8-bit field used to discard undeliverable packets. The Header Checksum field 222 is a 16-bit field that provides a checksum on the IPv4 header. The Source Address field 224 and Destination Address field 226 are 32-bit fields used to store the IPv4 address of the sending node and receiving node, respectively. The Padding 228 is used in conjunction with the Options field 202. The Options field 202 size is typically a multiple of 32-bits but, if an "Option" is not 32-bits in length, it uses padding options in the remaining bits to make the IPv4 header 200 an integral number of 4-byte blocks.

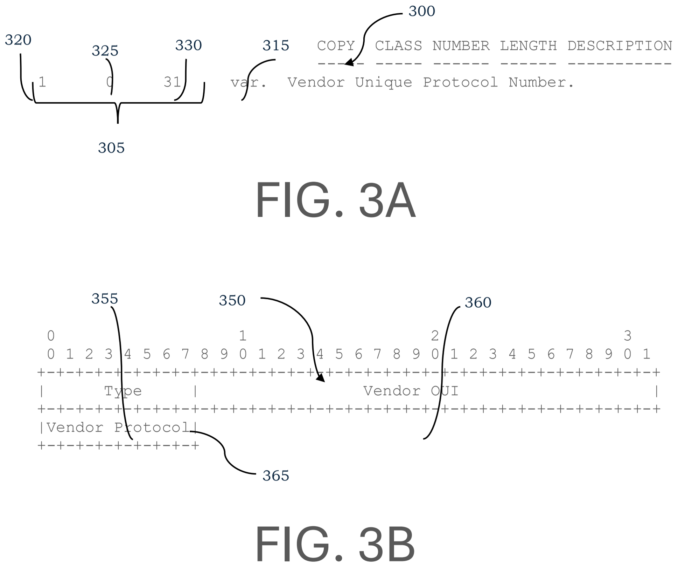

Referring now to FIGs. 2, 3a, and 3b, FIGs. 3a and 3b illustrate an example IPv4 Vendor Unique Protocol Number definition 300 and Vendor Unique Protocol Number "Option" 350, respectively. As mentioned above, if the Protocol field 220 in the IPv4 header 200 is encoded with the vendor private protocol number (e.g. "150" in the example embodiments described herein), then the Options field 202 can be encoded with the Vendor Unique Protocol Number "Option" 350. In the various example embodiments described herein, the Vendor Unique Protocol Number definition 300 defines the Vendor Unique Protocol Number "Option" 350 encoded into the Options field 202. A Vendor Unique Protocol Number defined according to an example embodiment includes a 1-octet Type field 305, 355 followed by type-specific encoding which, in the example embodiments described herein, comprises a Vendor OUI field 360 and a Vendor Protocol field 365. The Options field 202 can be of variable length 315, with a minimum size of 1-octet (indicating type only) for situations in which the Option does not include any type-specific data and a maximum size being limited by the maximum permissible value of the IHL field 206 in the IPv4 header 200. The 1-octet Type field 305, 355 can be viewed as having 3 fields: a 1-bit Copy flag 320, a 2-bit Class field 325, and a 5-bit Number field 330.

The Copy flag 320 can be used to indicate whether this Option is copied into all fragments on fragmentation. For example, a "0" encoded in the Copy flag 320 can indicate that this Option is not copied into all fragments on fragmentation while a "1" encoded in the Copy flag 320 can indicate that this Option should be copied into all fragments on fragmentation. The Class field 325 can be used to define an Option class and, in the example embodiments described herein, can be encoded with a "0" to indicate that the Option class is "control", a "1" or a "3" to indicate that the Option class is "reserved for future use", or a "2" to indicate that the Option class is set to "debugging and measurement." In the example Vendor Unique Protocol Number definition 300, the Class field 325 is encoded with a "1" to indicate that the Option class is "reserved for future use." Finally, the Number field 330 can be used to specify the kind of Option appended to the IPv4 header. In the example embodiment shown in FIG. 3a, the Number field 330 is encoded with option number "31" which, if standardization is performed, should be reserved in the IANA IPv4 Parameters Registry.

Referring to FIG. 3b, the illustrated Vendor Unique Protocol Number "Option" 350 comprises the Type field 355 (comprising the Copy Flag 320, Class Field 325, and Number field 330 defined in FIG. 2), a Vendor OUI field 360, and a Vendor Protocol field 365. The 1-octet Type field 355 can be used to identify the appended option as a Vendor Unique Protocol Number "Option." The Vendor OUI field 360 comprises the 24-bit standardized Vendor OUI assigned by IEEE for the vendor and the Vendor Protocol field 365 comprises an 8-bit vendor protocol number from the space exclusively managed by the vendor. This Vendor Unique Protocol Number "Option" 350 is only included when the Protocol field 220 in the IPv4 header is encoded with the vendor private protocol number (i.e. "150" in the example embodiments).

FIGs. 4a and 4b illustrate an IPv6 header 400 and an example embodiment 402 for encoding the IPv6 header 400 to transport a vendor-proprietary IP-based protocol. A typical IPv6 header 400 comprises 8 fields including a Next Header field 410, which is an 8-bit field used by example embodiments to specify the protocol that will receive the payload 426 of the packet on the destination node (e.g. the vendor-proprietary IP-based protocol in the example embodiments). Because IPv6 headers remain fixed in size at 40 bytes, customized IPv6 Extension Headers (EH) 404, 406, 408 can be appended as needed to provide for any control functions that might be needed or useful. Extension headers are typically added between the IP header and the transport-layer header in an IPv6 packet. Like the appended "Options" field (350 in FIG. 3b) in the IPv4 embodiment described above, the EHs 404, 406, 408 provide for IPv6 control functions that could be needed or useful in some situations but are typically unnecessary for the most common IPv6 communications. The EHs 404, 406, 408 can include IPv6 provisions for timestamps, security, and special routing similar to the appended "Options" field in IPv4.

In addition to the Next Header field 410 and appended EHs 404, 406, 408, a typical IPv6 header 400 can also include a Ver field 410, a Traffic Class field 412, a Flow Label field 414, a Payload Length field 416, a Hop Limit field 418, a Source IPv6 Address field 420, a Destination IPv6 Address field 422, and an Upper Layer (UL) Header field 424. The Ver field 410 is a 4-bit field used to define the version of the IP packet. In the example embodiment, the Ver field 410 is encoded with a "6" indicating that the packet is an IPv6 packet. The Traffic Class field 412 is an 8-bit field that indicates the class or priority of the IPv6 packet and helps defines how the packet should be handled through intermediate devices between the source device and destination device. The Flow Label field 414 is a 20-bit field used by the source device to label packets belonging to the same flow to identify the sequence and session of the packet in a flow (i.e. sequence of packets that are exchanged between a source and destination in a single session) in order to request special handling by intermediate IPv6 routers. The Payload Length field is a 16-bit (unsigned integer) field that specifies the total length of the payload 426 in bytes. The Hop Limit field is an 8-bit field that sets the lifetime of the packet by indicating the maximum number of intermediate nodes the IPv6 packet is allowed to travel. The Source IPv6 Address field 420 and Destination IPv6 Address field 422 are both 128-bit fields that specify the IPv6 address of the sending device and the receiving device, respectively.

If an EH is appended, such as in the IPv6 header in FIG. 4b, the Next Header field 410 is encoded to point to the first EH 404 indicating the first EH 404 type. If an EH is not appended, such as in the IPv6 header in FIG. 4a, the Next Header field 410 points to the Upper Layer (UL) Header 428 identifying the protocol in the upper-layer Protocol Data Unit (PDU), such as TCP, UDP, etc. If both an EH and upper-layer protocol are not available, the Next Header field 410 is encoded with the value "59." If multiple EHs are appended, such as in the IPv6 header in FIG. 4b, the Next Header field in each EH points to the next EH, if one is appended, or to the Upper Layer (UL) Header 428, if the current EH is the last appended EH. Using FIG. 4b as an example: the Next Header field 410 in the IPv6 header 400 points to the first EH 404; the Next Header field 430 of the first EH 404 points to the second EH 406; the Next Header field 432 of the second EH 406 points to the third EH 408; and the Next Header field 434 of the third EH 408 point to the Upper Layer (UL) Header 428.

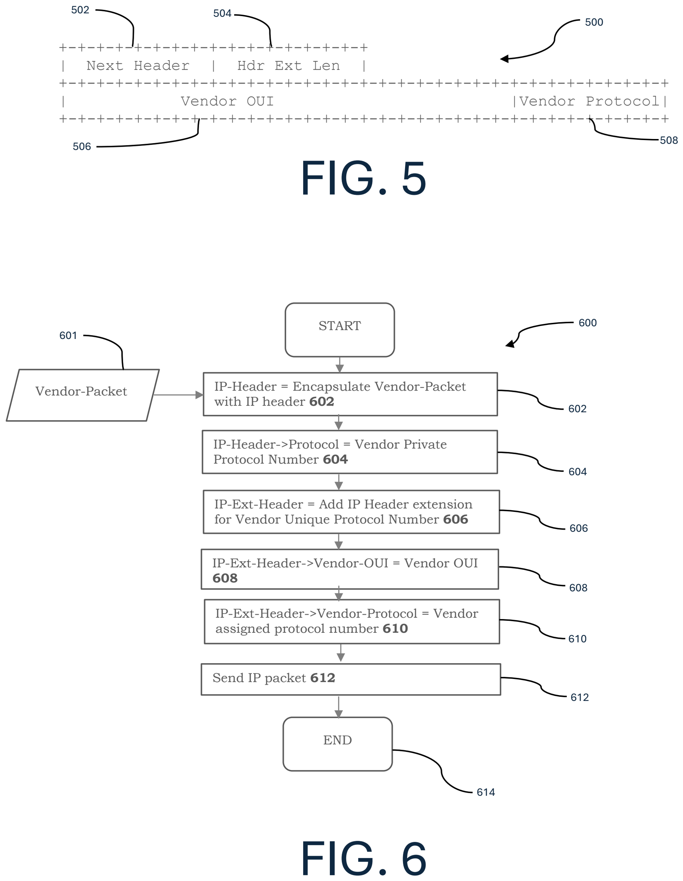

Example embodiments define a new IPv6 EH type, termed "Vendor Private Protocol EH" which functions to carry the Vendor Unique Protocol Number in an IPv6 packet header similar to the IPv4 Vendor Unique Protocol Number "Option" (350 in FIG. 3b). If standardization is performed, preferably the "Vendor Private Protocol EH" type is reserved in the IANA IPv6 Parameters registry. An example format of a Vendor Private Protocol EH 500 is illustrated in FIG. 5. The Vendor Private Protocol EH 500 comprises a Next Header field 502, a Hdr Ext Len field 504, a Vendor OUI field 506, and a Vendor Protocol field 508. The Next Header field 520 is an 8-bit selector that points to the EH appended after the Vendor Private Protocol EH 500 identifying the type of header immediately following the Vendor Private Protocol EH 500. The Hdr Ext Len field 504 is an 8-bit unsigned integer representing the length of the Vendor Private Protocol EH 500 in number of octets (not including the first 2 octets) which, in the case of this example embodiment, is "3." The Vendor OUI field 506 is encoded with the 24-bit standardized Vendor OUI assigned to a vendor by IEEE. The Vendor Protocol field 508 comprises an 8-bit vendor protocol number from the space exclusively managed by the vendor.

FIG. 6 illustrates a method 600 implemented by a node transporting the vendor-proprietary IP-based protocol according to example embodiments. A vendor-proprietary protocol packet 601 is input to the method 600 and it is encapsulated with an IP header at step 602. In step 604, the IP header is encoded to specify the protocol that will receive the payload of the packet on the destination node (e.g. the vendor-proprietary IP-based protocol in the example embodiments). In IPv4, this comprises encoding the vendor private protocol number (e.g "150" in the embodiments described herein) in the IPv4 header 200 Protocol field 220 illustrated in FIG. 2. In IPv6, this comprises encoding a pointer to the Vendor Private Protocol EH 500 in the IPv6 Next Header field 410 illustrated in FIG. 4b. Next, an IP Header extension for the Vendor Unique Protocol Number tuple is appended to the IP header in step 606. In IPv4, this comprises appending the Vendor Unique Protocol Number "Option" 350 in the Option field 202 of the IPv4 header 200. In IPv6, this comprises appending the Vendor Private Protocol EH 500 to the IPv6 header 400. In step 608, the Vendor OUI tuple field 360, 506 is encoded with the Vendor OUI assigned to the vendor by IEEE and in step 610 the Vendor Protocol Number tuple field 365, 508 is encoded with the value exclusively assigned by the vendor for the proprietary protocol. Finally, the IP packet is sent to the desired destination node in step 612 and the method terminates 614.

While this disclosure includes references to illustrative embodiments, this specification is not intended to be construed in a limiting sense. Various modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated to explain the nature of this disclosure may be made by those skilled in the art without departing from the scope of the disclosure, e.g., as expressed in the following claims.

The use of figure numbers and/or figure reference labels in the description is intended to identify one or more possible embodiments of the claimed subject matter to facilitate the interpretation of the claims. Such use is not to be construed as necessarily limiting the scope of the claims to the embodiments shown in the corresponding figures.

Although the elements in the following method claims are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Unless otherwise specified herein, in addition to its plain meaning, the conjunction "if" may also or alternatively be construed to mean "when" or "upon" or "in response to determining" or "in response to detecting," which construal may depend on the corresponding specific context. For example, the phrase "if it is determined" or "if [a stated condition] is detected" may be construed to mean "upon determining" or "in response to determining" or "upon detecting [the stated condition or event]" or "in response to detecting [the stated condition or event]."

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

The description and drawings merely illustrate the principles of the disclosure. It will thus be appreciated that those of ordinary skill in the art will be able to devise various arrangements that, although not explicitly described or shown herein, embody the principles of the disclosure and are included within its spirit and scope. Furthermore, all examples recited herein are principally intended expressly to be only for pedagogical purposes to aid the reader in understanding the principles of the disclosure and the concepts contributed by the inventor(s) to furthering the art and are to be construed as being without limitation to such specifically recited examples and conditions. Moreover, all statements herein reciting principles, aspects, and embodiments of the disclosure, as well as specific examples thereof, are intended to encompass equivalents thereof.

The functions of the various elements shown in the figures, including any functional blocks labeled as "processors" and/or "controllers," may be provided using dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the technique being selectable by the implementer as more specifically understood from the context.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

"SUMMARY OF SOME EMBODIMENTS" in this specification is intended to introduce some example embodiments, with additional embodiments being described in "DESCRIPTION OF EMBODIMENTS" and/or in reference to one or more drawings. "SUMMARY OF SOME EMBODIMENTS" is not intended to identify essential elements or features of the claimed subject matter, nor is it intended to limit the scope of the claimed subject matter.

## Claims

1. A method for transporting a vendor-proprietary protocol comprising vendor-proprietary protocol packets over Internet Protocol (IP), the method comprising:
encapsulating each of the vendor-proprietary protocol packets with an IP header;
encoding the IP header with a vendor-proprietary protocol indicator comprising indicia indicating that a payload associated with the IP header comprises a vendor-proprietary protocol packet;
adding an IP header extension to the IP header, the IP header extension including at least a Vendor Unique Protocol Number tuple comprising a vendor identification field and a protocol identification field;
encoding the vendor identification field with a vendor identification indicator identifying a vendor of the vendor-proprietary protocol;
encoding the protocol identification field with a vendor protocol identification indicator identifying the vendor-proprietary protocol; and
sending the encapsulated vendor-proprietary protocol packets over a network.

2. The method of claim 1, wherein the Internet Protocol (IP) further comprises Internet Protocol version 4 (IPv4) and wherein the vendor-proprietary protocol indicator further comprises a designated standard vendor-proprietary protocol number encoded in a Protocol field of the IP header.

3. The method of claim 2, wherein the IP header extension further comprises a Vendor Unique Protocol Number Option encoded in an Options field of the IP header.

4. The method of claim 3, wherein the Vendor Unique Protocol Number Option further comprises a Type field encoded with indicia indicating that the IP header extension is a Vendor Unique Protocol Number Option.

5. The method of claim 1, wherein the vendor identification indicator further comprises a vendor organizationally unique identifier (OUI) assigned to the vendor.

6. The method of claim 1, wherein the protocol identification indicator further comprises a vendor protocol number assigned by the vendor to identify the vendor-proprietary protocol.

7. The method of claim 1, wherein the Internet Protocol (IP) further comprises Internet Protocol version 6 (IPv6) and wherein the IP header extension further comprises a Vendor Private Protocol Extension Header (EH) appended to the IP header.

8. The method of claim 7, wherein the vendor-proprietary protocol indicator further comprises a pointer to the Vendor Private Protocol EH.

9. The method of claim 8, wherein the Vendor Private Protocol EH further comprises a Next Header field and wherein if the IP header comprises a subsequent IPv6 EH appended after the Vendor Private Protocol EH, then the Next Header field is encoded with a pointer to the subsequent IPv6 EH and if the IP header does not comprise a subsequent IPv6 EH appended after the Vendor Private Protocol EH, then the Next Header field is encoded with a pointer to an Upper Layer EH.

10. The method of claim 8, wherein the Vendor Private Protocol EH further comprises a Hdr Ext Len field encoded with indicia indicating a length of the Vendor Private Protocol EH.

11. An apparatus comprising means for performing the method of any of claims 1 to 10.
